# EUROPEAN PATENT APPLICATION

(11) **EP 4 390 750 A1**
(43) Date of publication of application: **26.06.2024**
(21) Application number: 23207456.7
(22) Date of filing: 02.11.2023
(51) Int. Cl.: G06F 40/109

(54) **COMPUTER IMPLEMENTED METHOD FOR HANDLING TRUETYPE FONT FILES IN AN EMBEDDED SYSTEM**

(30) Priority: 22.12.2022 DE 102022214284; 08.09.2023 DE 102023208686
(71) Applicant: Continental Automotive Technologies GmbH, 30175 Hannover (DE)
(72) Inventor: Kabatek, Ulrich, 60488 Frankfurt am Main (DE)
(74) Representative: Continental Corporation

(57) **Abstract**

A computer implemented method (100) for handling TrueType font files (110) in an embedded system (138), a TrueType font file (110) representing a specific font, the TrueType font file (110) consisting of a plurality of concatenated tables containing font data, the plurality of tables at least including a 'glyf' table (114) which defines the appearance of the glyphs, i.e., the outlines of the characters of the font, the plurality of tables without the 'glyf' table (114) being the remaining tables, the embedded system (138) at least comprising a first memory (140) and a second memory (142), whereas the first memory (140) is slower in terms of reading and/or writing performance than the second memory (142), the method (100) comprising the steps: separating (102) the font data into at least a first (134) and a second set of data (136), whereas the first set of data (134) is constructed out of the 'glyf' table (114), and the second set of data (136) constructed at least out of the remaining tables; loading (104) the first set of data (134) into the first memory (140); loading (106) the second set of data (136) into the second memory (142), and; prior to the rendering operation (108) of a specific glyph (152), loading the data corresponding to the specific glyph (152) from the first set of data (134) into the second memory (142), if it is not already loaded into the second memory (142).

## Description

### Technical Field

The present disclosure relates to methods and systems for handling fonts in embedded systems, particularly TrueType fonts.

### Technical Background

Embedded systems are fundamental parts of a wide variety of technologies and products, ranging from digital watches and traffic light controllers to infotainment systems in vehicles. As a combination of a processor, memory, input, and/or output devices, they serve a dedicated function within a larger mechanical or electronic system. For the most part, embedded systems are designed comprising display devices as a graphical user interface.

Typically, an embedded system is cost optimized and thus does not have a lot of memory which is fast. It characteristically features a slow memory, which often is not memory mapped, and can be accessed only on a block basis (for example, a NAND flash memory). This memory is usually much cheaper and available in larger sizes.

On the contrary, fast memory is usually memory mapped and allows random access. However, this type of memory is more expensive and limited in size (for example RAM or NOR flash memory).

Modern embedded display systems, in order to be as versatile as possible, have to provide appealing text rendering quality in a lot of languages. For this purpose, usually a font engine is used. In most cases, this is based on the standardized TrueType (TTF) or OpenType (OTF) outline font standards while the open-source software development library FreeType is widely employed as a font engine to render text onto bitmaps. Such a font engine normally requires the fonts to be in fast memory. In the case of FreeType, fonts can be handled memory mapped or file mapped. However, in the case a lot of languages must be supported, the corresponding TTF fonts will have memory sizes of several tens of megabyte (MB), thus requiring an extended amount of expensive fast memory.

It is therefore desirable to have access to methods and systems that do not require a large and fast memory to handle TTF files in embedded systems.

### Summary of the Invention

Therefore, the objective of this disclosure is to provide methods and system that overcome the above stated shortcomings of the prior art.

A first aspect of the present disclosure is a computer implemented method for handling TrueType font (TTF) files in an embedded system. A TrueType font file represents a specific font and consists of a plurality of concatenated tables containing font data. The plurality of tables at least including a 'glyf' table which defines the appearance of the glyphs, i.e., the outlines of the characters of the font. The plurality of tables without the 'glyf' table are the remaining tables. The embedded system at least comprising a first memory and a second memory, whereas the first memory is slower in terms of reading and/or writing performance than the second memory. The method comprises the steps of: separating the font data into at least a first and a second set of data, whereas the first set of data is constructed out of the 'glyf' table, and the second set of data constructed at least out of the remaining tables; loading the first set of data into the first memory; loading the second set of data into the second memory, and; prior to the rendering of a specific glyph, loading the data corresponding to the specific glyph from the first set of data into the second memory, if it is not already loaded into the second memory.

Any TTF file consists of a sequence of concatenated tables in which a table is a sequence of words. The first table is the font directory that facilitates access to the other tables in the font. These other tables contain the font data and may appear in any order. Certain tables are required for all fonts while others are optional, depending upon the functionality expected of a particular font.

The other tables include, for example, a table called 'name', which contains the name for the font. There is also a table called `cmap', which contains the mapping of characters to glyphs. A glyph describes the specific shape, design, or representation of a character. In other words, the glyphs of a font describe the outlines of the fonts characters and the corresponding data like contour points are stored in the table called `glyf'.

The disclosed invention is based on the realization that only a small fraction of the content of a TTF file needs to be accessed frequently in memory to render the font on a display while other tables are accessed very differently.

Most of the tables require random access memory, for example to search for specific properties using a binary search. However, one notable exception is the 'glyf' table, which is usually accessed only to render a specific glyph, or initially, when a font engine like FreeType loads the font. During rendering, only data for a single glyph is required at a time and this single glyph has a small size of only a few hundred bytes. The 'glyf' table also accounts for the biggest part of a TTF file, in most cases up to 90%. The remaining tables then make up only a small portion of a TTF file of around 10%. In other words, the remaining tables need to be accessed frequently while the 'glyf' table only needs to be accessed rarely.

Thus, the invention proposes to split the TTF file into at least two distinct parts which are handled differently in terms of loading into memory. The small and frequently accessed part is loaded once into the fast memory. The large but rarely/sparsely accessed part is loaded into the slower memory. An example for the first memory is a NAND flash memory or an embedded multimedia card memory. An example for the second memory is a random-access memory (RAM) or a combination of RAM and NOR flash memory.

However, it might also be possible that the slower read/write capabilities are due to a cloud based memory, where the limiting effect can originate from a bad internet connection.

In a most basic approach, the TTF file is broken up into three parts: the part before the "glyf" table, the "glyf" table itself, and the part after the "glyf" table. This results in a three-part separation of the font and has the advantage that the font data is not modified. The 'glyf' table as the first set of data can then be loaded into the first memory while the other two parts can be loaded into the second memory. However, the two parts before and after the "glyf" table can also be combined resulting in a two-part separation.

In an advantageous embodiment, the glyphs of the 'glyf' table are sorted prior to being copied to memory by their frequency of use, whereas more frequent glyphs appear first.

It is also possible to apply further modifications to the different parts before loading them into memory. For example, all tables which are needed for layouting or rendering are put in the front and/or tables which are not necessary for rendering are omitted entirely. For example, the 'post' table might be removed in case FreeType is used for rendering, since FreeType does not require it for steady operation.

It is also possible to introduce additional tables to the font data for special handling purposes. Multiple fonts can be combined in memory into a single TTF file, even in arbitrary sequence. This allows to load only necessary data into the fast memory, reducing memory cost significantly.

In an advantageous embodiment, the second set of data contains data from the 'glyf' table. This embodiment allows to store more frequently used glyphs in the fast memory to avoid reloading and thus, enhance access time. When a frequent glyph is to be rendered, it is not necessary to load is from the first, slower memory since it is already available from the second, faster memory.

According to a second aspect of the present disclosure, a computer program product comprises instructions which, when the program is executed by a computer, cause the computer to carry out the steps of the afore described method.

According to a third aspect of the present disclosure, a computer-readable storage medium comprises instructions which, when executed by a computer, cause the computer to carry out the steps of the afore described method.

According to a fourth aspect of the present disclosure, a data carrier signal carries the computer program product according to the second aspect.

According to a fifth aspect of the present disclosure, an embedded system comprises at least one microcontroller. Further, the embedded system comprises at least a first memory and a second memory, the first memory being slower in terms of reading and/or writing performance than the second memory, whereas the first and second memory are communicatively coupled to the at least one microcontroller. Also, the embedded system comprises at least one display which is communicatively coupled to the at least one microcontroller. Further, the embedded system is formed to execute the afore described method to render glyphs on the at least one display.

The display might be part of an infotainment system, an instrument cluster, a radio, or a head-up display. The embedded system may further comprise additional parts such as a processor or a graphical processing unit. Different electronic parts of the embedded system may be communicatively coupled via a bus, for example a CAN bus.

The different parts of the embedded system may be built into a single unit. But it is also possible to distribute the parts of the embedded system into different units. For example, the memory can be incorporated in a server while the display and microcontroller are part of a unit inside a vehicle such as a car, motorcycle, truck, train, helicopter, plane, or the like.

In an advantageous embodiment, a font engine is used to render the TrueType font based on the second set of data in the second memory. In other words, the font engine uses the data in the faster memory for rendering.

According to a sixth aspect of the present disclosure, a vehicle implements the aforementioned embedded system.

### Brief Description of the Drawings

The invention will be described in the following by means of example embodiments with reference to the accompanying drawings, wherein:
Figure 1 shows a flow chart of a computer implemented method for handling TrueType font files in an embedded system;
Figure 2 shows a schematic detailing a step of the method for handling TrueType font files in an embedded system of Fig. 1;
Figure 3 shows a schematic of an embedded system carrying out the method for handling TrueType font files of Fig. 1; and
Figure 4 shows a schematic of a vehicle in which the embedded system of Fig. 3 is implemented.

### Detailed Description of the Drawings

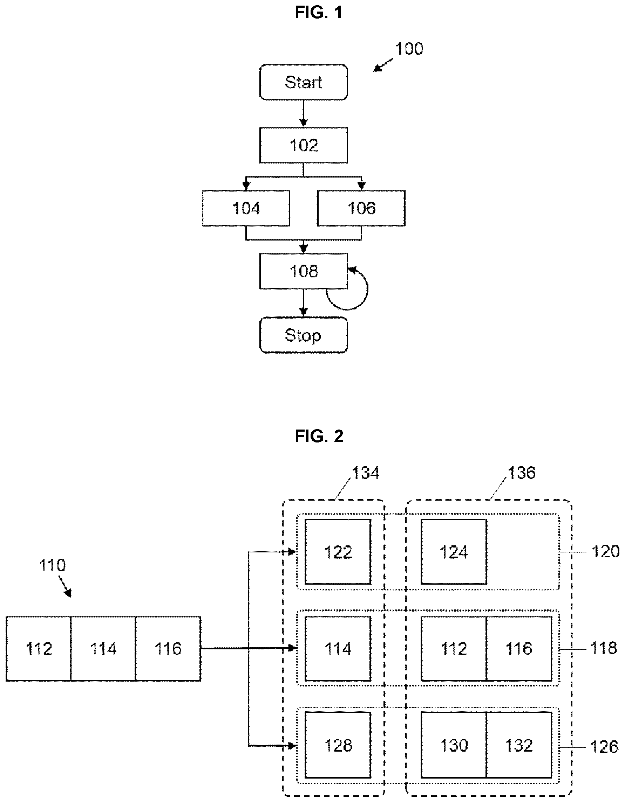

Figure 1 shows a flow chart of a computer implemented method 100 for handling TrueType font (TTF) files 110 in an embedded system 138.

Any TrueType font file 110 represents a specific font and consists of a plurality of concatenated tables containing font data. Some tables contain data relevant for layouting or rendering the font, some hold information to speed up the rendering process, yet others store features, settings, copyright notices, font names, style names, and other information related to the font. Some tables are mandatory for any TTF file 110 while others are optional. One mandatory table is a 'glyf' table 114 which defines the appearance of the glyphs of the font, i.e., the outlines of the characters of the font, encoded into glyph data 152 as an accumulation of specific glyph data 154 for all the glyphs that make up the font.

In a separation step 102 of the computer implemented method 100, a TrueType font file 110 is separated into at least a first 134 and a second set of data 136, whereas the first set of data 134 is constructed out of the 'glyf' table 114, and the second set of data 136 is constructed at least out of the remaining tables, i.e., the plurality of tables of the TTF file 110 excluding the 'glyf' table 114.

The embedded system 138 at least comprises a first memory 140 and a second memory 142, whereas the first memory 140 is slower in terms of reading and/or writing performance than the second memory 142.

Then, in a first loading step 104 of the method 100, the first set of data 134 is loaded into the first memory 140. Simultaneously, in a second loading step 106, the second set of data 136 is loaded into the second memory 142. However, it is also possible to execute the first 104 and second loading step 106 successively.

In a rendering step 108, when specific glyph data 154 shall be rendered, the specific glyph data 154 is loaded from the first set of data 134 into the second memory 142. However, if the specific glyph data 154 is already loaded into the second memory 142, for example because the glyph is used frequently and the second set of data 136 contains data from the 'glyf' table 114 which is frequently used, then, this step is omitted to avoid unnecessary workload. The rendering step 108 can be repeated for all glyphs that are to be rendered, which is visualized in Fig. 1 by the circular arrow.

Figure 2 shows a schematic detailing a step of the method 100 for handling TrueType font files 110 in an embedded system 138 of Fig. 1.

In particular, Fig. 2 details three different approaches regarding the separation step 102 of Fig. 1. In the example of Fig. 2, the TTF file 110 consists of a first part 112, the 'glyf' table 114, and a second part 116. The first part 112 holds all data appearing before the 'glyf' table 114, while the second part 116 holds all data appearing after the 'glyf' table 114. Figure 2 details a first 118, second 120, and third approach 126 on how to separate the TTF file 110 into the first 134 and second set of data 136.

In the first approach 118, the TTF file 110 is separated into the 'glyf' table 114, which constitutes the first set of data 134 and will be loaded into the first memory 140, while the first 112 and second part 116 are combined without further modifications to constitute the second set of data 136, which will be loaded into the second memory 142.

In the second approach 120, the TTF file 110 is separated into a first modified 'glyf' table 122 and first modified remaining tables 124. The first modified 'glyf' table 122 is a sorted version of the 'glyf' table 114, where the most frequently used glyph data 152 appear in the front of the table. The first modified remaining tables 124 consist of the first 112 and second part 116 of the TTF file 110, whereas frequently used tables, for example those which hold information relevant for layouting and rendering, are sorted to appear first in the table. The first modified 'glyf' table 122 constitutes the first set of data 134 and will be loaded into the first memory 140. The first modified remaining tables 124 constitute the second set of data 136 and will be loaded into the second memory 142.

In the third approach 126, the TTF file 110 is separated into a second modified `glyf' table 128, a frequently used 'glyf' table 130, and a second modified remaining tables 132. The second modified 'glyf' table 128 is a copy of the 'glyf' table 114, where the most frequently used glyph data 152 have been removed. The second modified `glyf' table 128 will be loaded into the first memory 140 as the first set of data 134.

These most frequently used glyph data 152 form the frequently used 'glyf' table 130. The second modified remaining tables 132 are a copy the remaining tables, i.e., the plurality of tables of the TTF file 110 excluding the 'glyf' table 114, where tables irrelevant to the rendering process have been removed. The combined frequently used 'glyf' table 130 and second modified remaining tables 132 are stored in the second memory 142 for fast access as the second set of data 136.

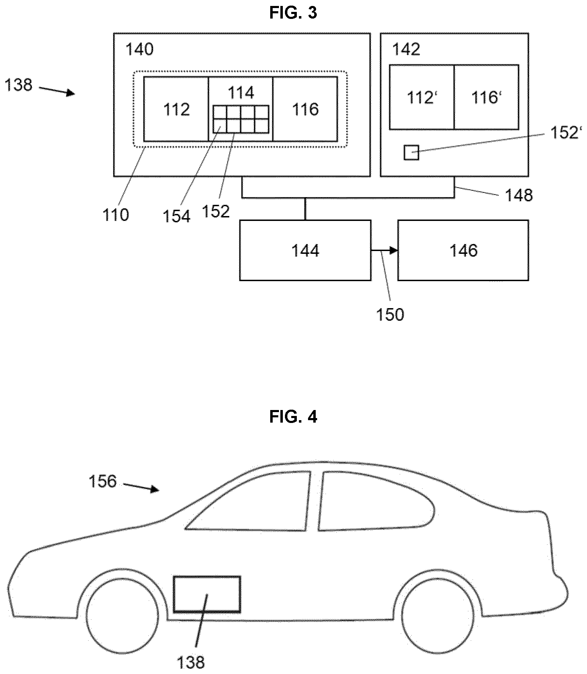

Figure 3 shows a schematic of an embedded system 138 carrying out the method 100 for handling TrueType font files 110 of Fig. 1.

The embedded system 138 comprises a first memory 140 and a second memory 142, whereas the first memory 140 is slower in terms of reading and/or writing performance than the second memory 142 but with higher storage capacity. Further, the embedded system 138 comprises a microcontroller 144 and a display 146. The first 140 and second memory 142 are communicatively coupled to the microcontroller 144 via a data bus 148. The display 146 is also communicatively coupled to the microcontroller 144 and a video output 150 enables the microcontroller 144 to show rendered glyphs on the display 146.

The first set of data 134 is loaded into the first memory 140. Usually, this is done by flashing the first set of data 134 at the end of the production process. In the example of Fig. 1, the first set of data 134 is an unmodified TTF file 110. Hence, the first set of data 134 is comprised of the first part 112, the 'glyf' table 114, and the second part 116. The 'glyf' table 114 comprises glyph data 152 defining the appearance of the glyphs in the font, which is visualized in Fig. 3 by multiple rectangles. A single rectangle indicates individual glyph data of all the glyphs of the font.

During startup of the embedded system 138, a copy of the first part 112' and a copy of the second part 116' is loaded into the second memory 142. However, similar to the first set of data 134, it is also possible to flash the copies 112', 116' at the end of the production process to the second memory 142, for example, if the second memory 142 is a combination of random-access memory (RAM) and NOR flash memory. At this stage, the embedded system 138 has all the info about how to layout and render glyphs available in the faster memory, except for the glyph data 152. Because this data accounts for the majority of the TTF file 110 size, it is not desirable to load it into the faster but smaller second memory 142.

Once the microcontroller is instructed, for example by an infotainment system, to show text on the display 146, the rendering process is started. During rendering, only a single specific glyph 154 is required at a time. Prior to the rendering process, the specific glyph data 154 is copied into the second memory 142 as a copy of the specific glyph data 154'. It can then be conveniently loaded from the faster, second memory 142. After the rendering process of the copy of the specific glyph data 154' is finished, the rendering step 108 repeats with the next glyph to be rendered.

Figure 4 shows a schematic of a vehicle 156 in which the embedded system 138 of Fig. 3 is implemented.

The parts of the embedded system 138 might be incorporated into a single device as shown in Fig. 4. However, all or selected parts of the embedded system 138 might also serve functions in another device, such as an infotainment system.

### Reference Sign List

- 100: method
- 102: separation step
- 104: first loading step
- 106: second loading step
- 108: rendering step
- 110: TrueType font file
- 112: first part
- 114: 'glyf' table
- 116: second part
- 118: first approach
- 120: second approach
- 122: first modified 'glyf' table
- 124: first modified remaining tables
- 126: third approach
- 128: second modified 'glyf' table
- 130: frequently used 'glyf' table
- 132: second modified remaining tables
- 134: first set of data
- 136: second set of data
- 138: embedded system
- 140: first memory
- 142: second memory
- 144: microcontroller
- 146: display
- 148: data bus
- 150: video output
- 152: glyph data
- 154: specific glyph data
- 156: vehicle

## Claims

1. A computer implemented method (100) for handling TrueType font files (110) in an embedded system (138), a TrueType font file (110) representing a specific font, the TrueType font file (110) consisting of a plurality of concatenated tables containing font data, the plurality of tables at least including a 'glyf' table (114) which defines the appearance of the glyphs, i.e., the outlines of the characters of the font, the plurality of tables without the 'glyf' table (114) being the remaining tables, the embedded system (138) at least comprising a first memory (140) and a second memory (142), whereas the first memory (140) is slower in terms of reading and/or writing performance than the second memory (142), the method (100) comprising the steps:
a) separating (102) the font data into at least a first (134) and a second set of data (136), whereas the first set of data (134) is constructed out of the 'glyf' table (114), and the second set of data (136) constructed at least out of the remaining tables,
b) loading (104) the first set of data (134) into the first memory (140),
c) loading (106) the second set of data (136) into the second memory (142), and
d) prior to the rendering operation (108) of a specific glyph (152), loading the data corresponding to the specific glyph (152) from the first set of data (134) into the second memory (142), if it is not already loaded into the second memory (142).

2. The method according to claim 1, whereas the glyphs of the 'glyf' table (114) are sorted prior to being copied to memory by their frequency of use, whereas more frequent glyphs appear first.

3. The method according to claim 1 or 2, whereas the second set of data (136) contains data from the 'glyf' table (114).

4. A computer program product comprising instructions which, when the program is executed by a computer, cause the computer to carry out the steps of the method (100) of any of the claims 1 to 3.

5. A computer-readable storage medium comprising instructions which, when executed by a computer, cause the computer to carry out the steps of the method (100) of any of the claims 1 to 3.

6. A data carrier signal carrying the computer program product of claim 4.

7. An embedded system (138) comprising:
a) at least one microcontroller (144),
b) at least a first memory (140) and a second memory (142), the first memory (140) being slower in terms of reading and/or writing performance than the second memory (142), whereas the first (140) and second memory (142) are communicatively coupled to the at least one microcontroller (144), and
c) at least one display (146) which is communicatively coupled to the at least one microcontroller (144),
whereas the embedded system (138) is formed to execute the method (100) according to any of claims 1 to 3 to render glyphs on the at least one display (146).

8. The embedded system according to claim 7, whereas a font engine is used to render the TrueType font file (110) based on the second set of data (136) stored in the second memory (142).

9. A vehicle (156), in which the embedded system (138) according to any of claims 7 or 8 is implemented.
